Europäisches Patentamt

European Patent Office

Office européen des brevets

(19)

(11) Numéro de publication: **0 002 405**
**B1**

(12) **FASCICULE DE BREVET EUROPEEN**

(21) Numéro de dépôt: **78400188.5**

(22) Date de dépôt: **17.11.78**

(51) Int. Cl.³: **F 16 B 39/02**

(54) **Dispositif de blocage positif d'une vis dans un trou taraudé**

(30) Priorité: **07.12.77 FR 7736874**

(43) Date de publication de la demande:
**13.06.79 Bulletin 79/12**

(45) Mention de la délivrance du brevet:
**03.09.80 Bulletin 80/18**

(84) Etats contractants désignés:
**BE CH DE LU NL SE**

(56) Documents cités:
**DE - C - 507 225**
**DE - C - 1 303 562**
**FR - A - 422 273**
**US - A - 1 734 743**
**US - A - 1 877 665**

(73) Titulaire: **Société dite: Shur-Lok International S.A.**
**Rue du Midi 7 - 9**
**B - 4822 Petit-Rechain BE**

(72) Inventeur: **Dessouroux, Alexis**
**49 Rue Cockerill**
**B - 4880 Spa BE**

(74) Mandataire: **Bressand, Georges**
**c/o Cabinet Lavoix 2 Place d'Estienne d'Orves**
**F - 75441 Paris Cedex 09 FR**

Courier Press, Leamington Spa, England.

Dispositif de blocage positif d'une vis dans un trou taraudé.

La présente invention est relative à un dispositif de blocage pour bloquer une vis dans un trou, et notamment, bien que non exclusivement, dans un trou borgne.

Dans de nombreuses applications en effet, il est nécessaire de fixer une première pièce sur une seconde pièce au moyen d'une vis qui traverse la première et qui est vissée dans un trou taraudé dans la seconde pièce. Il est également fréquemment nécessaire que cette vis d'assemblage soit serrée et bloquée à un couple désiré qui doit être conservé et maintenu quelles que soient les conditions de travail imposées.

On doit dans ce but freiner cette vis pour l'empêcher de se desserrer. Ce freinage est facilement réalisable lorsque le trou traverse ladite seconde pièce et il existe pour cela différents systèmes ou dispositifs bien connus des techniciens.

On connait différents dispositifs dans lesquels on utilise un système de filetages de sens contrariés pour bloquer un organe d'assemblage maintenant plusieurs éléments fixés ensemble.

Le brevet des Etats-Unis n° 1.877.665 décrit un dispositif relativement compliqué dans lequel l'organe d'assemblage est une vis sur laquelle est vissé un écrou présentant des parties filetées en sens contraire, la vis ayant une extrémité de section polygonale avec laquelle coopère un écrou de blocage ayant une ouverture de forme complémentaire, ce qui lui interdit de tourner. Les écrous doivent être rendus solidaires l'un de l'autre et de la vis.

Le brevet des Etats-Unis n° 1.734.743 décrit un agencement plus simple dans lequel l'organe d'assemblage est une vis comportant deux filetages de sens inverse dont le second, adjacent à l'extrémité de la vis, a un diamètre réduit. Deux écrous complémentaires de ces filetages sont rendus solidaires l'un de l'autre et dela vis.

Ces deux dispositifs ne peuvent être utilisés qu'à condition de pouvoir accéder librement aux deux extrémités de l'organe d'assemblage pour solidariser les moyens d'arrêt.

Par contre, on ne connait pas de moyens à la fois efficaces et simple à utiliser lorsque l'organe d'assemblage doit être fixé dans un trou borgne et que son extrémité n'est par conséquent pas assessible.

L'invention a donc pour but de remédier à cette lacune en réalisant un dispositif simple, pratique et efficace pour bloquer une vis de façon positive, avec un couple désiré sans laisser à la vis aucune possibilité de se desserrer, et ce quelles que soient les conditions de travail, dans un trou taraudé, borgne ou non.

L'invention a pour objet à cet effet un dispositif de blocage d'une vis dans un trou taraudé, caractérisé en ce qu'il comprend en combinaison une noix filetée et ladite vis, ayant des filetages de sens contraire coopérant avec des filetages de sens respectivement correspondants formés dans la paroi interne du trou, des moyens d'arrêt pour la noix, et des moyens pour rendre la noix et la vis solidaires en rotation.

Suivant une autre caractéristique de l'invention, ladite noix filetée est creuse, son filetage est externe et de pas à droite et elle comporte N cannelures axiales dans sa surface interne.

Suivant encore une autre caractéristique de l'invention, la vis est creuse, son filetage est externe et de pas à gauche et elle comporte N cannelures axiales dans sa surface interne.

Dans un mode de réalisation, le troue taraudé présente au voisinage de son extrémité opposée à l'entrée de la vis un premier filetage de pas à droite et, à son extrémité d'entrée de la vis, un second filetage de pas à gauche et de diamètre plus grand, le départ dudit premier filetage étant espacé de la fin du second.

Suivant encore une autre caractéristique, lesdits moyens pour rendre la noix et la vis solidaires en rotation sont constitués par une tige ayant N cannelures axiales adaptées pour coopérer à la fois avec les cannelures internes de la noix et de la vis.

D'autres caractéristiques et avantages de l'invention apparaîtront au cours de la description qui va suivre, faite en se référant au dessin annexé, donné uniquement à titre d'exemple et dans lequel:

— la Fig. 1 est une vue en coupe longitudinale partielle d'un dispositif de blocage d'une vis dans un trou taraudé suivant l'invention, en position de blocage de cette vis;

— la Fig. 2 est une vue en élévation latérale d'un clé pour la mise en place de la noix de blocage du dispositif représenté à la Fig. 1.

En se référant au dessin, la référence 1 désigne une première pièce qui, dans cet exemple, est une simple plaque, la référence 2 désigne une second pièce, massive, sur laquelle est fixée la pièce 1 au moyen d'une vis 3 dans un trou taraudé 4 de la pièce 2.

Le dispositif suivant l'invention pour bloquer la vis 3 avec un couple de serrage donné comprend en outre une noix 5, une tige filetée 6 et une goupille 7.

Le troue 4 présente une première partie 8 dans la surface interne de laquelle est taraudé un filetage 9, qui, dans cet exemple, est de pas à gauche, et une seconde partie 10 de diamètre plus petit dans la surface interne de laquelle est taraudé en filetage 11, qui dans ce même exemple est de pas à droite, qui ne s'étend pas complétement jusqu'au fond du trou borgne 4 et commence à une certaine distance de la fin du filetage 9. Inversement, le filetage 9 pourrait être de pas à droite et le filetage 11 de pas à gauche.

La noix 5 est cylindrique et creuse et comporte sur une partie de sa surface externe un filetage 12 correspondant au filetage 11 et donc, dans cet exemple, de pas à droite. La noix 5 creuse comporte dans sa surface interne un nombre N de cannelures s'étendant axialement.

La vis 3 est creuse et son filetage externe 19 correspond au filetage 9 du trou 4 et est donc, dans cet exemple, de pas à gauche. Cette vis comporte une tête 13 en forme d'écrou, par exemple à six pans, et comporte dans sa surface interne, qui présente la même diamètre que le diamètre interne de la noix 5, un nombre N de cannelures s'étendant axialement, identiques aux cannelures internes de la noix 5.

La tige 6 est une tige filetée qui comporte dans sa surface externe un certain nombre N de cannelures s'étendant axialement et identiques aux cannelures internes de la noix 5 et de la vis 3.

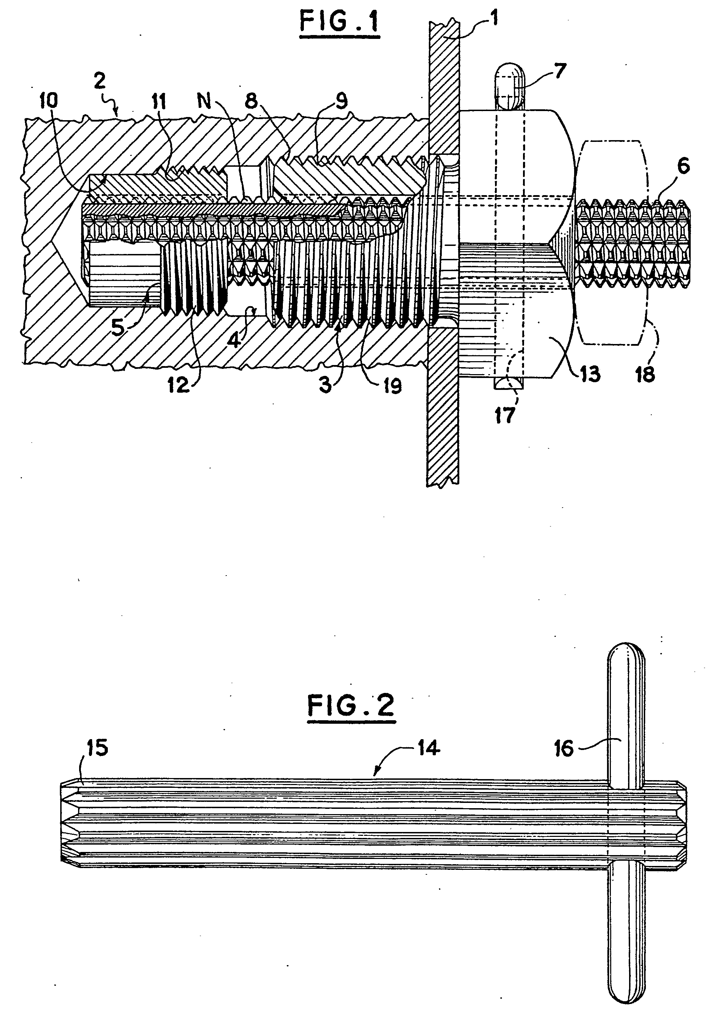

Pour bloquer la vis 3 avec un couple donné en fixant la pièce 1 sur la pièce 2, on introduit tout d'abord la noix 5 dans le trou 4 en utilisant par exemple un outil 14 tel que représenté à la Fig. 2, constitué d'une tige cylindrique comportant des cannelures externes 15 identiques mais légèrement sous dimensionnées par rapport aux cannelures internes de la noix 5 et de la vis 3 et quie est avantageusement pourvu d'une broche 16 emmanchée à force dans un trou au voisinage d'une extrémité de la tige.

On visse la noix 5 dans la partie 10 du trou au moyen de l'outil 14 dont les cannelures sont amenées en prise avec les cannelures internes de la noix. On visse cette dernière jusqu'à ce que son extrémité vienne en butée contre le fond du trou.

On retire alors l'outil 14 de la noix et l'on met en place la pièce 1 sur la pièce 2 au moyen de la vis 3 qui est alors vissée et bloquée par exemple au moyen d'une clé dynamométrique, avec le couple désiré.

On introduit alors la tige 14 dans les cannelures de la vis 3 que l'on amène en coïncidence avec les cannelures internes de la noix 5 en faisant très légèrement tourner la vis 3 dans un sens ou dans l'autre de façon à pouvoir enfoncer la tige 6 à travers la noix 5 après avoir retiré la tige 14. On a avantage à utiliser la tige 14 pour effectuer l'opération d'alignment, un jeu existant entre les cannelures de cette tige et celles de la vis 3 et de la noix 5.

On immobilise enfin la tige dans la tête 13 de la vis 3 au moyen d'une goupille fendue ordinaire 7 qui est disposée à travers un trou 17 traversant la tête de la vis et en même temps à travers un trou radial percé suivant un diamètre de la tige 6. On comprend qu'il suffit de faire coulisser la tige 6 dans la vis et dans la noix afin d'amener son trou de passage dela goupille en regard du trou 17 de la tête de la vis, la tige 6 pouvant coulisser librement à l'intérieur de la noix et de la vis. On replie ensuite de façon classique les extrémités de la goupille 7 à l'extérieur de la tête de la vis afin d'empêcher la goupille de s'échapper.

On comprend que la vis 4 est alors bloquée positivement, du fait que toute tendance de la vis à se desserrer entraînerait la tige 6 en rotation en raison de son engrènement avec les cannelures de celle-ci. Le filetage de la noix 5 étant de sens contraire à celui de la vis 3, toute tendance de cette dernière à se desserrer tendrait également à entraîner la noix 5 par l'intermédiaire des cannelures en prise avec celles de la tige 6 à tourner dans le sens de son serrage puisque son filetage est de sens contraire. L'extrémité de la noix 5 étant déjà en contact avec le fond du trou, la noix est ainsi bloquée et la vis ne peut se desserrer.

On comprend que la goupille 7 étant uniquement destinée à empêcher la tige 6 de coulisser axialement en sortant de la vis ne supporte aucun effort.

Pour démonter l'ensemble et dévisser la vis 3, il suffit de retirer tout d'abord la goupille 7 puis de faire sortir la tige 6 et dans ce but on peut utiliser un écrou tel que représenté en traits mixtes en 18 à la Fig. 1 que l'on visse sur le filetage de la tige 6 et qui extrait celle-ci de la vis 3 en prenant appui sur la tête 13.

On comprend que plusieurs trous peuvent être percés dans la tige 6 pour le passage de la goupille 7, ces trous étant échelonnés de manière à permettre d'utiliser le dispositif dans des trous ayant une profondeur différente. De même, il est possible d'utiliser la tige 6 comme outil pour le montage du dispositif et pour immobiliser la vis et la noix l'une par rapport à l'autre, en prévoyant au voisinage d'une extrémité de la tige 6 un trou supplémentaire dans lequel on peut engager une broche quelconque pour assurer le serrage de la noix 5 dans le fond du trou.

Le dispositif suivant l'invention peut également être utilisé dans un trou traversant complètement la pièce 2. En effet, la noix 5 n'étant filetée que sur une partie de sa longeur peut être amenée dans une position de blocage lorsqu'elle est vissée à fond dans le filetage 11. Dans un autre exemple (également non représenté), le trou 4 peut déboucher à travers la pièce 2 mais cependant comporter un épaulement interne contre lequel vient buter l'extrémité de la noix 5.

Enfin, le nombre N de cannelures est suffisant pour que l'angle de rotation nécessaire pour amener en coïncidence les cannelures de la vis avec celles de la noix soit négligables vis-à-vis du couple de serrage désiré.

## Revendications

1. Dispositif de blocage d'une vis dans un trou taraudé (4), en particulier dans un trou borgne taraudé, caractérisé en ce qu'il comprend en combinaison ladite vis (3) et une noix filetée (5), cette vis et cette noix ayant des filetages (12, 19) de sens contraires coopérant avec des filetages (9, 11) de sens respectivement correspondants formés dans la paroi interne du trou (14), des moyens d'arrêt pour la noix (5), et des moyens (6) pour rendre la noix (5) et la vis (3) solidaires en rotation.

2. Dispositif suivant la revendication 1, caractérisé en ce que ladite noix filetée (5) est creuse, son filetage (12) est externe et de pas à droite et elle comporte N cannelures axiales dans sa surface interne.

3. Dispositif suivant l'une quelconque des revendications 1 et 2, caractérisé en ce que la vis (3) est creuse, son filetage (19) est externe et de pas à gauche et elle comporte N cannelures axiales dans sa surface interne, identiques à celles de la noix (5).

4. Dispositif suivant l'une quelconque des revendications 1 à 3, caractérisé en ce que le trou taraudé (4) présente au voisinage de son extrémité opposée à l'entrée de la vis (3), un premier filetage (11) de pas à droite et, à son extrémité d'entrée de la vis (3), un second filetage (9) de pas à gauche et de diamètre plus grand, le départ dudit premier filetage étant espacé de la fin du second.

5. Dispositif suivant la revendication 1, caractérisé en ce que lesdits moyens pour rendre la noix (5) et la vis (3) solidaires en rotation sont constitués par une tige (6) ayant N cannelures axiales extérieures adaptées pour coopérer à la fois avec les cannelures internes de la noix (5) et de la vis (3).

6. Dispositif suivant l'une quelconque des revendications précédentes, caractérisé en ce que le trou taraudé (4) est un trou borgne et les moyens d'arrêt de la noix (5) sont constitués par le fond du trou.

7. Dispositif suivant l'une quelconque des revendications 1 à 5, caractérisé en ce que le trou présente intérieurement un épaulement adapté pour former une butée pour ladite noix (5).

8. Dispositif suivant l'une quelconque des revendications 1 à 5, caractérisé en ce que le filetage (12) de la noix (5) s'étend axialement sur une partie seulement de la longueur de la noix.

9. Dispositif suivant l'une quelconque des revendications précédentes, caractérisé en ce que lesdits moyens pour rendre la noix (5) et la vis (3) solidaires en rotation sont constitués par une tige filetée (6) comportant N cannelures axiales identiques à celles formées dans les surfaces internes de la noix (5) et de la vis (3), ladite tige comportant au moins un trou radial au voisinage de ses extrémités.

10. Dispositif suivant l'une quelconque des revendications précédentes, caractérisé en ce que la tête (13) de la vis (3) présente un trou radial (17) qui la traverse, une goupille (7) étant disposée à travers ledit trou de la tête de la vis et à travers le trou radial de la tige.

## Claims

1. Device for locking a screw in a tapped hole (4), in particular in a blind tapped hole, characterized in that it comprises in combination said screw (3) and a screwthreaded block (5), said screw and said block having screwthreads (12, 19) of opposite direction, cooperating with screwthreads (9, 11) of respectively corresponding direction formed in the inner wall of the hole (14), stop means for the block (5) and means (6) for preventing rotation between the block (5) and the screw (3).

2. A device as claimed in claim 1, wherein the screwthreaded block (5) is hollow and its outer screwthread (12) is a right-hand screwthread and it comprises N axial splines in its inner surface.

3. A device as claimed in claim 1 or 2, wherein the screw (3) is hollow and its outer screwthread (19) is a left hand screwthread and it comprises N axial splines and in its inner surface which are identical to the splines of the block (5).

4. A device as claimed in claim 1, 2 or 3, wherein the tapped hole (4) has, in the vicinity of the end thereof opposed to the entrance of the screw (3), a first right-hand screwthread (11) and at the end thereof adjacent the entrance of the screw (3), a second left-hand screwthread (9) of larger diameter, the start of the first screwthread being spaced from the end of the second screwthread.

5. A device as claimed in claim 1, wherein said means for preventing rotation between the block (5) and the screw (3) comprise a rod (6) having N outer axial splines adapted to cooperate with the inner splines of the block (5) and screw (3).

6. A device as claimed in any one of the preceding claims, wherein the tapped hole (4) is a blind hole and the means for stopping the block (5) comprise the inner end of the tapped hole.

7. A device as claimed in any one of the claims 1 to 5, wherein the tapped hole has an internal shoulder adapted to form an abutment for the block (5).

8. A device as claimed in any one of the claims 1 to 5, wherein the screwthread (12) of the block (5) extends axially only in a part of the length of the block.

9. A device as claimed in any of the preceding claims, wherein said means for preventing rotation between the block (5) and the screw (3) comprise a screwthreaded rod (6) having N axial splines identical to the splines formed in the inner surfaces of the block (5) and screw (3), said rod having at least one radial aperture in the vicinity of its ends.

10. A device as claimed in any one of the preceding claims, wherein the head (13) of the screw (3) has a radial aperture (17) extending therethrough, and a pin (7) is disposed in said aperture of the head of the screw and extends through a radial aperture of the rod.

**Patentansprüche**

1. Vorrichtung zur Blockierung einer Schraube in einem Gewindeloch, insbesondere einem Gewindesackloch, dadurch gekennzeichnet, daß sie in Kombination die Schraube (3) und eine Gewindenuß (5), wobei Schraube und Nuß gegengängige Gewinde (12, 19) aufweisen, die mit in der Innenwand des Lochs (4) ausgebildeten Gewinden (9, 11) jeweils entsprechenden Gangsinns zusammenwirken, eine Anschlageinrichtung für die Nuß (5) und eine Einrichtung (6) zur drehfesten Verbindung von Nuß (5) und Schraube (3) umfaßt.

2. Vorrichtung nach Anspruch 1, dadurch gekennzeichnet, daß die Gewindenuß (5) hohl ist, ihr Gewinde (12) außen liegt rechtsgängig ist und sie N Axialkannelierungen in ihrer Innenfläche aufweist.

3. Vorrichtung nach einem der Ansprüche 1 und 2, dadurch gekennzeichnet, daß die Schraube (3) hohl ist, ihr Gewinde (19) außen liegt und linksgängig ist und sie N mit denen der Nuß (5) identische Axialkannelierungen in ihrer Innenfläche aufweist.

4. Vorrichtung nach einem der Ansprüche 1 bis 3, dadurch gekennzeichnet, daß das Gewindeloch (4) im Bereich seines dem Eintritt für die Schraube (3) abgekehrten Endes ein erstes, rechtsgängiges Gewinde (11) und an seinem Eintrittsende für die Schraube (3) ein zweites, linksgängiges Gewinde (9) größeren Durchmessers aufweist, und daß der Anfang des ersten Gewindes im Abstand vom Ende des zweiten liegt.

5. Vorrichtung nach Anspruch 1, dadurch gekennzeichnet, daß die Einrichtung zur drehfesten Verbindung von Nuß (5) und Schraube (3) durch einen Stab (6) gebildet ist, welcher außen N Axialkannenlierungen für ein gleichzeitiges Zusammenwirken mit den Innenkannelierungen von Nuß (5) und Schraube (3) aufweist.

6. Vorrichtung nach einem der vorstehenden Ansprüche, dadurch gekennzeichnet, daß das Gewindeloch (4) ein Sackloch ist, und daß die Anschlageinrichtung für die Nuß (5) durch den Boden des Loches gebildet ist.

7. Vorrichtung nach einem der Ansprüche 1 bis 5, dadurch gekennzeichnet, daß das Loch innenseitig eine Schulter zur Bildung eines Anschlags für die Nuß (5) aufweist.

8. Vorrichtung nach einem der Ansprüche 1 bis 5, dadurch gekennzeichnet, daß das Gewinde (12) der Nuß (5) sich axial nur über einen Teil der Länge der Nuß erstreckt.

9. Vorrichtung nach einem der vorstehenden Ansprüche, dadurch gekennzeichnet, daß die Einrichtung zur drehfesten Verbindung von Nuß (5) und Schraube (3) durch einen Gewindestab (6) mit N Axialkannelierungen gebildet ist, die mit den in den Innenflächen von Nuß (5) und Schraube (3) ausgebildeten identisch sind, und daß der Stab wenigstens ein radiales Loch im Bereich seiner Enden aufweist.

10. Vorrichtung nach einem der vorstehenden Ansprüche, dadurch gekennzeichnet, daß der Kopf (13) der Schraube (3) ein ihn durchsetzendes radiales Loch (17) aufweist und daß ein Splint (7) das Loch des Schraubenkopfes und das radiale Loch des Stabes durchsetzend angeordnet ist.

## FIG.1

## FIG.2